# EUROPEAN PATENT APPLICATION

(11) **EP 4 645 985 A1**
(43) Date of publication of application: **05.11.2025**
(21) Application number: 25173249.1
(22) Date of filing: 29.04.2025
(51) Int. Cl.: H04W 72/0453, H04W 84/12

(54) **NEGOTIATION HANDSHAKE FOR DYNAMIC SUBBAND OPERATION IN WIRELESS COMMUNICATIONS**

(30) Priority: 03.05.2024 US 202463641982 P; 19.04.2025 US 202519183784
(71) Applicant: MEDIATEK INC., Hsinchu City 30078 (TW)
(72) Inventor: LAI, Yi-Hsiang, Hsinchu City (TW); CHANG, Cheng-Yi, Hsinchu City (TW); LU, Kai Ying, San Jose (US); CHANG, Chia-Ming, Hsinchu City (TW)
(74) Representative: Hoefer & Partner Patentanwälte mbB

(57) **Abstract**

Techniques pertaining to negotiation handshake for dynamic subband operation, DSO, in wireless communications are described. A wireless communication apparatus (110) performs a negotiation handshake regarding a DSO with one other apparatus (120). The apparatus (110) then participates in the DSO with the other apparatus (120) pursuant to the negotiation handshake. **In** participating in the negotiation handshake, the apparatus (110) exchanges information on capabilities in supporting the DSO. The information on the capabilities includes information on at least a subband size, a subband position, a switching delay and a switching back delay.

## Description

### CROSS REFERENCE TO RELATED PATENT APPLICATION

The present disclosure is part of a non-provisional patent application claiming the priority benefit of U.S. Provisional Patent Application No. 63/641,982, filed 03 May 2024, the content of which herein being incorporated by reference in its entirety.

### TECHNICAL FIELD

The present disclosure is generally related to wireless communications and, more particularly, to negotiation handshake for dynamic subband operation (DSO) in wireless communications.

### BACKGROUND

Unless otherwise indicated herein, approaches described in this section are not prior art to the claims listed below and are not admitted as prior art by inclusion in this section.

In wireless communications, such as Wi-Fi (or WiFi) in wireless local area network (WLAN) systems in accordance with the current Institute of Electrical and Electronics Engineers (IEEE) 802.11 standards, access points (APs) can support channel bandwidths up to 320 MHz, but for Wi-Fi devices (such as stations (STAs)) only a few high-end client devices may support wider bandwidths such as 320MHz. Most clients, or STAs, only support smaller bandwidth such as 20MHz, 40MHz, 80MHz and 160 MHz due to cost consideration. For Wi-Fi network operations, all transmissions must include a primary 20MHz channel, regardless of the total bandwidth used. Despite wideband APs being able to utilize orthogonal frequency-division multiple-access (OFDMA) for scheduling resource units (RUs) among STAs, without larger-bandwidth STAs significant portions of bandwidth could end up being underused, thereby resulting in a decrease in spectral efficiency.

In IEEE 802.11bn, DSO occurs and allows AP to trigger STAs to switch to a subband by transmitting an initial control frame (ICF) to the STAs. Each of the STAs, in response, switches its central frequency, preamble decoder and payload decoder to a target subband. Then, each of the STAs responds by transmitting an initial control respond (ICR) back to AP to start a data transmission sequence.

At the time of the present disclosure, there exists a mechanism known as dynamic bandwidth expansion (DBE). This mechanism allows APs and STAs to utilize varying bandwidths at different times. Specifically, it employs a smaller bandwidth to minimize the impact on other basic service sets (BSSs) and switches to a full bandwidth when there is no interference from other BSSs. For example, given an AP with the capability of 320MHz and a STA with the capability of 160MHz, the DBE and DSO operation could be combined. Accordingly, when the AP starts a BSS with a narrower bandwidth of 80MHz, there will be no DSO operation; when the AP extends the operating bandwidth to 160MHz, DSO operation may be enabled with one DSO 80MHz subband; and when the AP extends the operating bandwidth to 320MHz, DSO subband configuration may be changed (e.g., to enable one or more DSO subbands, such as, one 80MHz DSO subband (DSO80) and one 160MHz DSO subband (DSO160)).

However, at the time of the present disclosure, there is no clear definition in the IEEE specification regarding how STAs and APs negotiate their capabilities to enable DSO. Therefore, there is a need for a solution of negotiation handshake, as a DSO negotiation mechanism, for DSO in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to negotiation handshake for DSO in wireless communications. It is believed that implementations of various schemes proposed herein may address or otherwise alleviate the aforementioned issues. Methods and an apparatus according to the invention are defined in the independent claims. The dependent claims define preferred embodiments thereof.

In one aspect, a method may involve a STA receiving a beacon frame from an AP announcing the AP's DSO capability within a BSS. The method may also involve the STA transmitting a management frame to the AP to participate in a negotiation handshake with the AP regarding a DSO responsive to receiving the beacon frame. The method may further involve the STA participating in the DSO with the AP pursuant to the negotiation handshake.

In another aspect, a method may involve an AP transmitting a beacon frame to a STA announcing the AP's DSO capability within BSS. The method may also involve the AP receiving a management frame from the STA to participate in a negotiation handshake with the STA regarding a DSO responsive to transmitting the beacon frame. The method may further involve the AP participating in the DSO with the STA pursuant to the negotiation handshake.

In yet another aspect, an apparatus may include a transceiver configured to communicate wirelessly and a processor coupled to the transceiver. The processor may perform a negotiation handshake regarding a DSO with one other apparatus. The processor may then participate in the DSO with the other apparatus pursuant to the negotiation handshake. In participating in the negotiation handshake, the processor may exchange, with the other apparatus, information on capabilities in supporting the DSO. The information on the capabilities may include information on at least a subband size, a subband position, a switching delay and a switching back delay. In particular, the processor may be configured to perform any of the method steps as defined in the method claims.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example design under a proposed scheme in accordance with the present disclosure.
FIG. 3 is a diagram of an example design under a proposed scheme in accordance with the present disclosure.
FIG. 4 is a diagram of an example design under a proposed scheme in accordance with the present disclosure.
FIG. 5 is a diagram of an example design under a proposed scheme in accordance with the present disclosure.
FIG. 6 is a diagram of an example design under a proposed scheme in accordance with the present disclosure.
FIG. 7 is a diagram of an example scenario under a proposed scheme in accordance with the present disclosure.
FIG. 8 is a diagram of an example scenario under a proposed scheme in accordance with the present disclosure.
FIG. 9 is a diagram of an example scenario under a proposed scheme in accordance with the present disclosure.
FIG. 10 is a block diagram of an example communication system under a proposed scheme in accordance with the present disclosure.
FIG. 11 is a flowchart of an example process under a proposed scheme in accordance with the present disclosure.
FIG. 12 is a flowchart of an example process under a proposed scheme in accordance with the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to negotiation handshake for DSO in wireless communications. According to the present disclosure, a number of possible solutions may be implemented separately or jointly. That is, although these possible solutions may be described below separately, two or more of these possible solutions may be implemented in one combination or another.

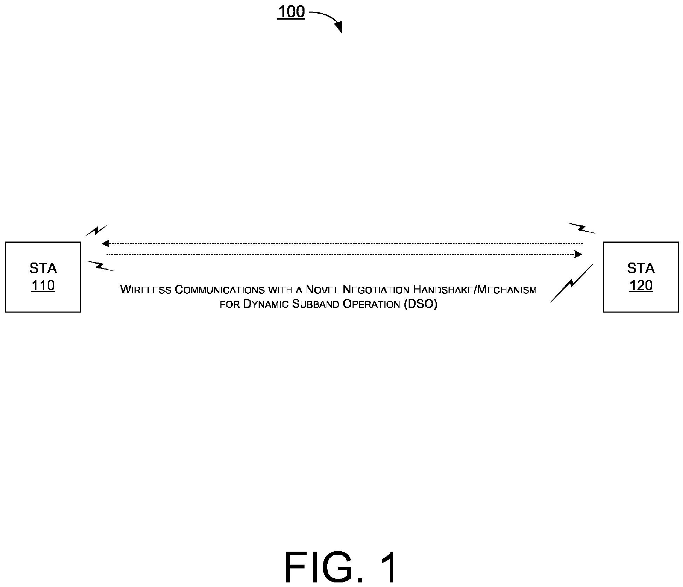

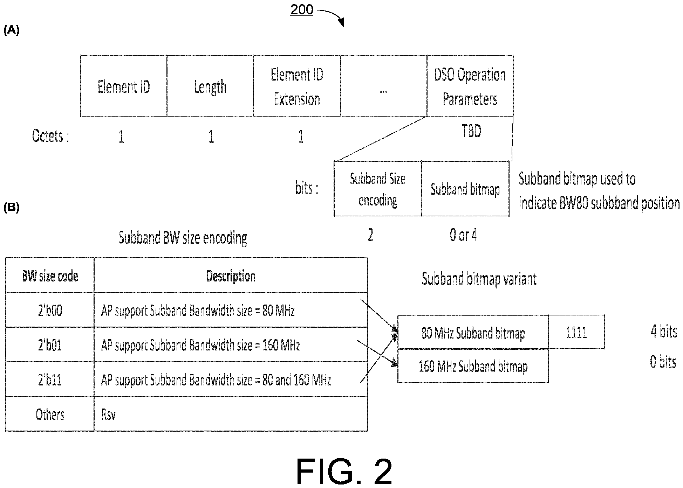

FIG. 1 illustrates an example network environment 100 in which various solutions and schemes in accordance with the present disclosure may be implemented. FIG. 2 ~ FIG. 12 illustrate examples of implementation of various proposed schemes in network environment 100 in accordance with the present disclosure. The following description of various proposed schemes is provided with reference to FIG. 1 ~ FIG.12.

Referring to FIG. 1, network environment 100 may involve at least a station (STA) 110 communicating wirelessly with a STA 120. Either of STA 110 and STA 120 may function as an access point (AP) STA or, alternatively, a non-AP STA. In some cases, STA 110 and STA 120 may be associated with a BSS in accordance with one or more IEEE 802.11 standards (e.g., IEEE 802.11bn and future-developed standards). Each of STA 110 and STA 120 may be configured to communicate with each other by utilizing the negotiation handshake for DSO in wireless communications in accordance with various proposed schemes described below. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

Under various proposed schemes in accordance with the present disclosure, with respect to a DSO negotiation concept, a DSO capability negotiation between an AP and a STA may include a bandwidth (BW) size field, a subband indication field, a switching delay, a subband size, and subband position(s). Under the proposed schemes, the subband size may be limited to only one type. With respect to subband position(s), a bitmap may be utilized to indicate the support of one or more positions of subband(s) within the operation bandwidth. Moreover, the switching delay may allow a STA to have more time to perform its frequency changing operation to switch from one subband (e.g., primary subband) to another subband (e.g., target subband).

FIG. 2 illustrates an example design 200 under a proposed scheme in accordance with the present disclosure. Design 200 may pertain to a DSO negotiation management frame generated and transmitted by an AP. Under the proposed scheme, the AP may use a Beacon frame as a DSO negotiation management frame to announce its DSO capability within a BSS associated with the AP. Referring to part (A) of FIG. 2, the DSO negotiation management frame used by the AP may be configured with a "DSO Operation Parameters" field, which may include a "Subband Size" subfield and a "Subband Bitmap" subfield. The Subband Bitmap subfield may be utilized to indicate the position(s) of one or more 80MHz (BW80) subbands. Referring to part (B) of FIG. 2, the two bits of the Subband Size subfield may be utilized to indicate the subband bandwidth size supported by the AP. For instance, a value of "00" may indicate that the AP supports a subband bandwidth size of 80MHz, a value of "01" may indicate that the AP supports a subband bandwidth size of 160MHz, and a value of "11" may indicate that the AP supports a subband bandwidth size of 80MHz and 160MHz. In case of the Subband Size subfield having a value of "00" or "11", the Subband Bitmap subfield may have a length of four bits "xxxx", with "x" set "1" to indicate that the respective 80MHz in a 320MHz bandwidth as being used as a DSO (and "0" otherwise). Conversely, in case of the Subband Size subfield having a value of "01", there may be no need for the Subband Bitmap subfield and hence its size may be zero bit. The Subband Bitmap may include the primary band and subband. In some implementations, the positions of supported subbands may be arranged in an ascending order from the lowest to the highest frequencies with the BSS from the least significant bit (LSB) to the most significant bit (MSB).

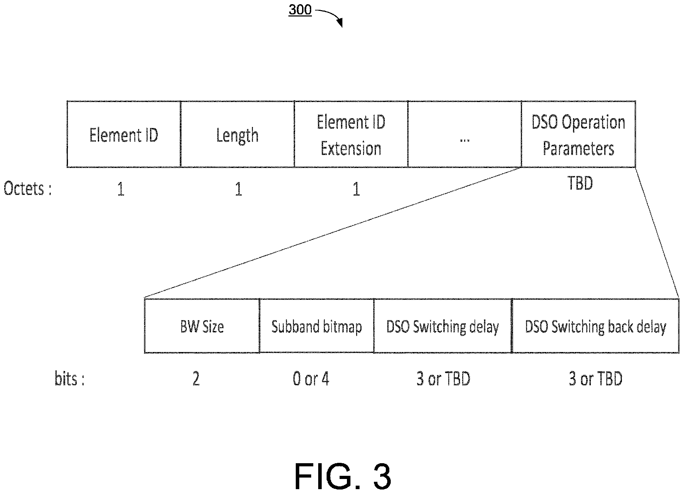

FIG. 3 illustrates an example design 300 under a proposed scheme in accordance with the present disclosure. Design 300 may pertain to a DSO negotiation management frame generated and transmitted by a STA. Under the proposed scheme, the STA may use the DSO negotiation management frame to negotiate a handshake with its associated AP. For instance, the STA may use the DSO negotiation management frame to request or respond to an AP to enable DSO (e.g., using a probe request frame, a probe response frame, or a new management frame as the DSO negotiation management frame). Referring to FIG. 3, the DSO negotiation management frame used by the STA may be configured with a "DSO Operation Parameters" field, which may include a "Subband Bandwidth Size" subfield, a "Subband Bitmap" subfield, a "DSO Switching Delay" subfield, and a "DSO Switching Back Delay" subfield. The DSO Switching Delay subfield may indicate an amount or length of time for the STA to switch from its current subband (e.g., the primary 80MHz band in the operating bandwidth) to a target subband for DSO. The DSO Switching Back Delay may indicate an amount or length of time for the STA to switch from the target subband for DSO back to the primary 80MHz band.

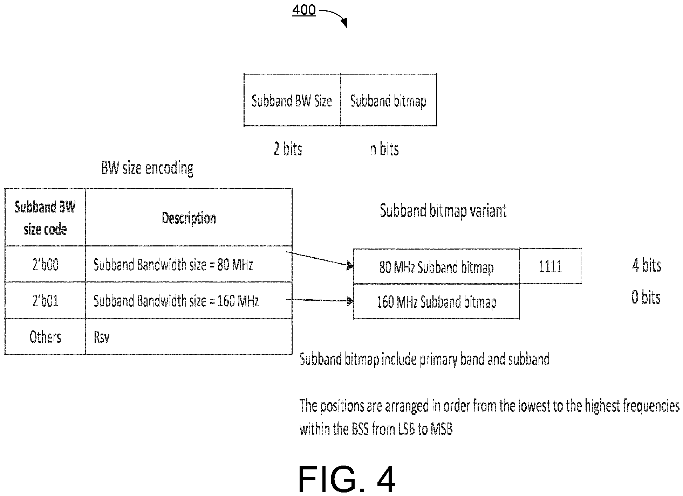

FIG. 4 illustrates an example design 400 under a proposed scheme in accordance with the present disclosure. Design 400 may pertain to an indication of the DSO subband size and subband position by a STA in its DSO negotiation management frame. Specifically, FIG. 4 shows an example of the format of indication of the STA's DSO subband bandwidth size and switching position capability. Referring to FIG. 4, the two bits of the Subband Size subfield may be utilized to indicate the subband bandwidth size supported by the STA. For instance, a value of "00" may indicate that the STA supports a subband bandwidth size of 80MHz, and a value of "01" may indicate that the STA supports a subband bandwidth size of 160MHz. In case of the Subband Size subfield having a value of "00", the Subband Bitmap subfield may have a length of four bits "xxxx", with "x" set "1" to indicate that the respective 80MHz in a 320MHz bandwidth as being used as a DSO (and "0" otherwise). Conversely, in case of the Subband Size subfield having a value of "01", there may be no need for the Subband Bitmap subfield and hence its size may be zero bit. The Subband Bitmap may include the primary band and subband. In some implementations, the positions of supported subbands may be arranged in an ascending order from the lowest to the highest frequencies with the BSS from the LSB to the MSB.

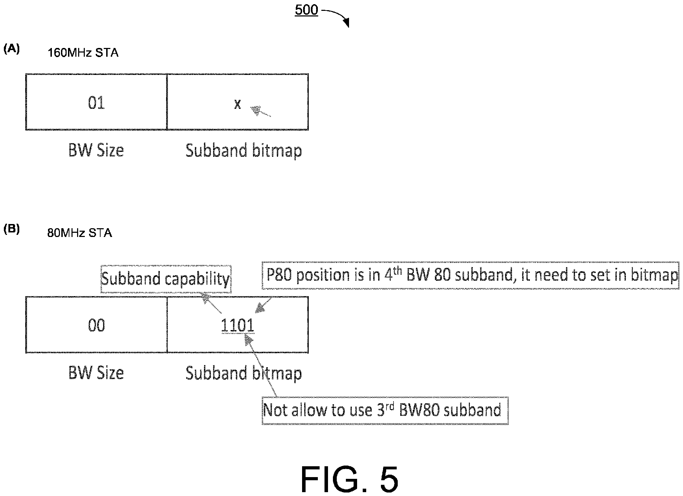

FIG. 5 illustrates an example design 500 under a proposed scheme in accordance with the present disclosure. Design 500 may pertain to an indication of the DSO subband size and subband position by a STA in its DSO negotiation management frame. Referring to part (A) of FIG. 5, in case that the STA has a 160MHz capability, the two bits of the Subband Size subfield may have a value of "01" and the Subband Bitmap subfield may be unnecessary and hence non-existent. Referring to part (B) of FIG. 5, in case that the STA has an 80MHz capability, the two bits of the Subband Size subfield may have a value of "00" and the four bits of the Subband Bitmap subfield may have a value of "1101" to indicate that, other than the third 80MHz subband in the 320MHz operating bandwidth, the other three 80MHz subbands (namely, the first, the second and the fourth) may be utilized for DSO. Moreover, in this example, given the fourth 80MHz subband being the primary 80MHz band, the corresponding bit in the bitmap needs to be set to "1".

With respect to the DSO subband bandwidth size, there may be two scenarios of negotiation when the STA supports a 160MHz or 80MHz operation. For example, in a first scenario for a 160MHz-capable STA, the STA may negotiate with its associated AP to use a primary 160MHz band and a 160MHz subband. In a second scenario (e.g., co-existent scenario) for the 160MHz-capable STA, the STA may only use an 80MHz subband (instead of all the DSO subband size of the STA) to limit its DSO operation at 80MHz. As another example, in a first scenario for an 80MHz-capable STA, the STA may negotiate with its associated AP to use a primary 80MHz and any 80MHz subband. In a second scenario (e.g., DBE scenario) for the 80MHz-capable STA, in case the AP changes its BSS bandwidth, the STA may use a different 80MHz subband to communicate with the AP.

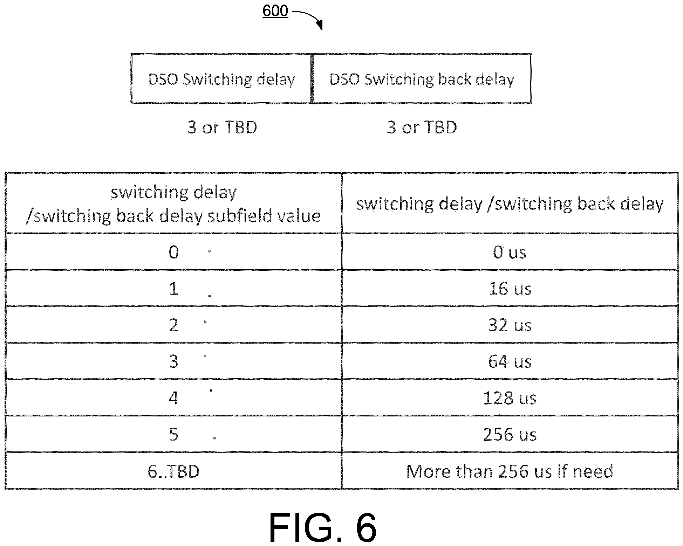

FIG. 6 illustrates an example design 600 under a proposed scheme in accordance with the present disclosure. Design 600 may pertain to an indication of DSO switching delay and switching back delay by a STA. As mentioned above, a DSO Switching Delay subfield may be utilized by the STA to indicate an amount or length of time, as a switching delay, for the STA to switch from the primary band to a subband. The DSO Switching Back Delay subfield may be utilized by the STA to indicate an amount or length of time, as a switching back delay, for the STA to switch from the subband back to the primary band. Each of the DSO Switching Delay subfield and the DSO Switching Back Delay subfield may have three bits (or a different number of bits), and different values in each of the DSO Switching Delay subfield and the DSO Switching Back Delay subfield may indicate a corresponding amount of delay. Referring to the example shown in FIG. 6, a value of 0 in each of the DSO Switching Delay subfield and the DSO Switching Back Delay subfield may indicate a delay of 0 microseconds (µs); a value of 1 in each of the DSO Switching Delay subfield and the DSO Switching Back Delay subfield may indicate a delay of 16µs; a value of 2 in each of the DSO Switching Delay subfield and the DSO Switching Back Delay subfield may indicate a delay of 32µs; a value of 3 in each of the DSO Switching Delay subfield and the DSO Switching Back Delay subfield may indicate a delay of 64µs; a value of 4 in each of the DSO Switching Delay subfield and the DSO Switching Back Delay subfield may indicate a delay of 128µs; a value of 5 in each of the DSO Switching Delay subfield and the DSO Switching Back Delay subfield may indicate a delay of 256µs; and so on.

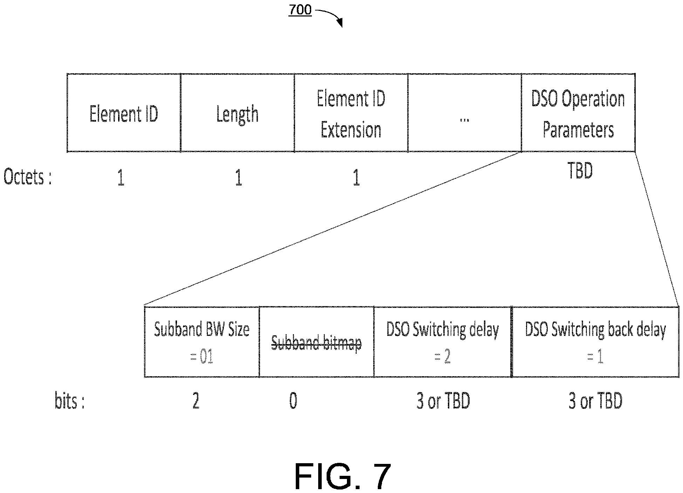

FIG. 7 illustrates an example scenario 700 under a proposed scheme in accordance with the present disclosure. Scenario 700 may pertain to an example of a 160MHz-capable STA notifying a 320MHz-capable AP using a DSO negotiation management frame. Referring to FIG. 7, the STA may indicate to the AP that it supports a primary 160MHz band a 160MHz subband with the two bits of the Subband Bandwidth Size subfield set to "01". Corresponding, there may be no need to have the Subband Bitmap subfield in the DSO Operation Parameters field. Moreover, the STA may also notify that its switching delay time and switching back delay time are 32µs and 16µs, respectively, by setting the value of the DSO Switching Delay subfield to 2 and the value of the DSO Switching Back Delay subfield to 1, respectively (e.g., by using the table shown in FIG. 6).

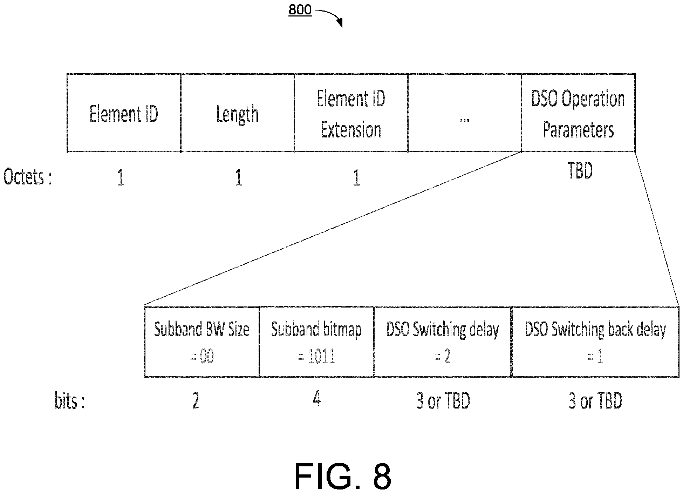

FIG. 8 illustrates an example scenario 800 under a proposed scheme in accordance with the present disclosure. Scenario 800 may pertain to an example of an 80MHz-capable STA notifying a 320MHz-capable AP using a DSO negotiation management frame. Referring to FIG. 8, the STA may indicate to the AP that it supports a primary 80MHz band as well as a third and a fourth 80MHz subbands with the two bits of the Subband Bandwidth Size subfield set to "00". Corresponding, four bits of the Subband Bitmap subfield may be set to "1011" to indicate that the first, third and fourth 80MHz subbands are available for DSO. Moreover, the STA may also notify that its switching delay time and switching back delay time are 32µs and 16µs, respectively, by setting the value of the DSO Switching Delay subfield to 2 and the value of the DSO Switching Back Delay subfield to 1, respectively (e.g., by using the table shown in FIG. 6).

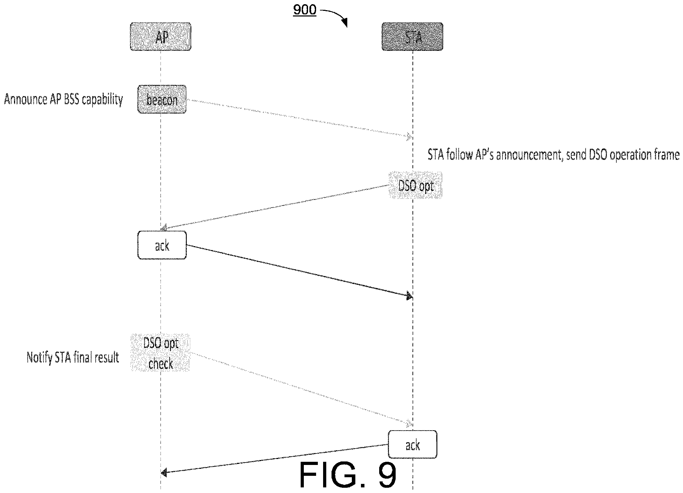

FIG. 9 illustrates an example scenario 900 under a proposed scheme in accordance with the present disclosure. Scenario 900 may pertain to a timing sequence of a DSO negotiation handshake between an AP and a STA. Referring to FIG. 9, initially the AP may transmit a Beacon frame to announce the capability of the AP (and its associated BSS) regarding DSO. Upon receiving the Beacon frame, the STA may transmit a DSO negotiation management frame containing a DSO Operation Parameters field to inform the AP of the STA's capability regarding DSO (e.g., to negotiate with the AP). Upon receiving the DSO negotiation management frame, the AP may respond to the STA with an acknowledgement (ACK). In addition, the AP may check the STA's DSO capability as indicated in the DSO Operation Parameters field against the AP's own DSO capability and then transmit a DSO operation check frame to notify the STA of the result of the negotiation. Upon receipt, the STA may respond to the AP with an ACK. Thereafter, a DSO participated by the AP and the STA may ensue.

### Illustrative Implementations

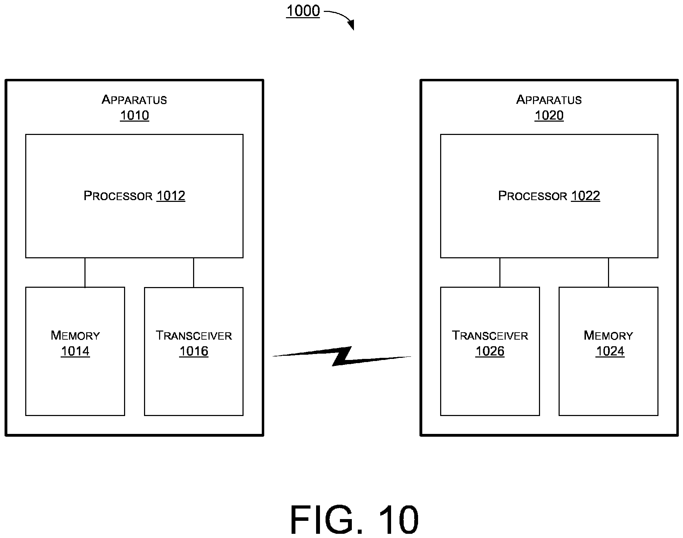

FIG. 10 illustrates an example system 1000 having at least an example apparatus 1010 and an example apparatus 1020 in accordance with an implementation of the present disclosure. Each of apparatus 1010 and apparatus 1020 may perform various functions to implement schemes, techniques, processes and methods described herein pertaining to negotiation handshake for DSO in wireless communications including the various schemes described above with respect to various proposed designs, concepts, schemes, systems and methods described above as well as processes described below. For instance, apparatus 1010 may be implemented in STA 110 and apparatus 1020 may be implemented in STA 120, or vice versa.

Each of apparatus 1010 and apparatus 1020 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 1010 and apparatus 1020 may be implemented in a smartphone, a smart watch, a personal digital assistant, a digital camera, or a computing equipment such as a tablet computer, a laptop computer or a notebook computer. Each of apparatus 1010 and apparatus 1020 may also be a part of a machine type apparatus, which may be an IoT apparatus such as an immobile or a stationary apparatus, a home apparatus, a wire communication apparatus or a computing apparatus. For instance, each of apparatus 1010 and apparatus 1020 may be implemented in a smart thermostat, a smart fridge, a smart door lock, a wireless speaker or a home control center. When implemented in or as a network apparatus, apparatus 1010 and/or apparatus 1020 may be implemented in a network node, such as an AP in a WLAN.

In some implementations, each of apparatus 1010 and apparatus 1020 may be implemented in the form of one or more integrated-circuit (IC) chips such as, for example and without limitation, one or more single-core processors, one or more multicore processors, one or more reduced-instruction set computing (RISC) processors, or one or more complex-instruction-set-computing (CISC) processors. In the various schemes described above, each of apparatus 1010 and apparatus 1020 may be implemented in or as a STA or an AP. Each of apparatus 1010 and apparatus 1020 may include at least some of those components shown in FIG. 10 such as a processor 1012 and a processor 1022, respectively. Each of apparatus 1010 and apparatus 1020 may further include one or more other components not pertinent to the proposed scheme of the present disclosure (e.g., internal power supply, display device and/or user interface device), and thus, such component(s) of apparatus 1010 and apparatus 1020 are neither shown in FIG. 10 nor described below in the interest of simplicity and brevity.

In one aspect, each of processor 1012 and processor 1022 may be implemented in the form of one or more single-core processors, one or more multicore processors, one or more RISC processors or one or more CISC processors. That is, even though a singular term "a processor" is used herein to refer to processor 1012 and processor 1022, each of processor 1012 and processor 1022 may include multiple processors in some implementations and a single processor in other implementations in accordance with the present disclosure. In another aspect, each of processor 1012 and processor 1022 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 1012 and processor 1022 is a special-purpose machine specifically designed, arranged and configured to perform specific tasks including those pertaining to negotiation handshake for DSO in wireless communications in accordance with various implementations of the present disclosure.

In some implementations, apparatus 1010 may also include a transceiver 1016 coupled to processor 1012. Transceiver 1016 may include a transmitter capable of wirelessly transmitting and a receiver capable of wirelessly receiving data. In some implementations, apparatus 1020 may also include a transceiver 1026 coupled to processor 1022. Transceiver 1026 may include a transmitter capable of wirelessly transmitting and a receiver capable of wirelessly receiving data. It is noteworthy that, although transceiver 1016 and transceiver 1026 are illustrated as being external to and separate from processor 1012 and processor 1022, respectively, in some implementations, transceiver 1016 may be an integral part of processor 1012 as a system on chip (SoC), and transceiver 1026 may be an integral part of processor 1022 as a SoC.

In some implementations, apparatus 1010 may further include a memory 1014 coupled to processor 1012 and capable of being accessed by processor 1012 and storing data therein. In some implementations, apparatus 1020 may further include a memory 1024 coupled to processor 1022 and capable of being accessed by processor 1022 and storing data therein. Each of memory 1014 and memory 1024 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 1014 and memory 1024 may include a type of read-only memory (ROM) such as mask ROM, programmable ROM (PROM), erasable programmable ROM (EPROM) and/or electrically erasable programmable ROM (EEPROM). Alternatively, or additionally, each of memory 1014 and memory 1024 may include a type of non-volatile random-access memory (NVRAM) such as flash memory, solid-state memory, ferroelectric RAM (FeRAM), magnetoresistive RAM (MRAM) and/or phase-change memory.

Each of apparatus 1010 and apparatus 1020 may be a communication entity capable of communicating with each other using various proposed schemes in accordance with the present disclosure. For illustrative purposes and without limitation, a description of capabilities of apparatus 1010, as STA 110, and apparatus 1020, as STA 120, is provided below in the context of example processes 1100 and 1200. For instance, each of apparatus 1010 and apparatus 1020 may perform a negotiation handshake regarding a DSO with one each other. Additionally, each of apparatus 1010 and apparatus 1020 may participate in the DSO with the other apparatus pursuant to the negotiation handshake. In participating in the negotiation handshake, each of apparatus 1010 and apparatus 1020 may exchange, with each other, information on capabilities in supporting the DSO. The information on the capabilities may include information on at least a subband size, a subband position, a switching delay and a switching back delay.

It is noteworthy that, although a detailed description of capabilities, functionalities and/or technical features of apparatus 1020 is provided below, the same may be applied to apparatus 1010 although a detailed description thereof is not provided solely in the interest of brevity. It is also noteworthy that, although the example implementations described below are provided in the context of WLAN, the same may be implemented in other types of networks.

### Illustrative Processes

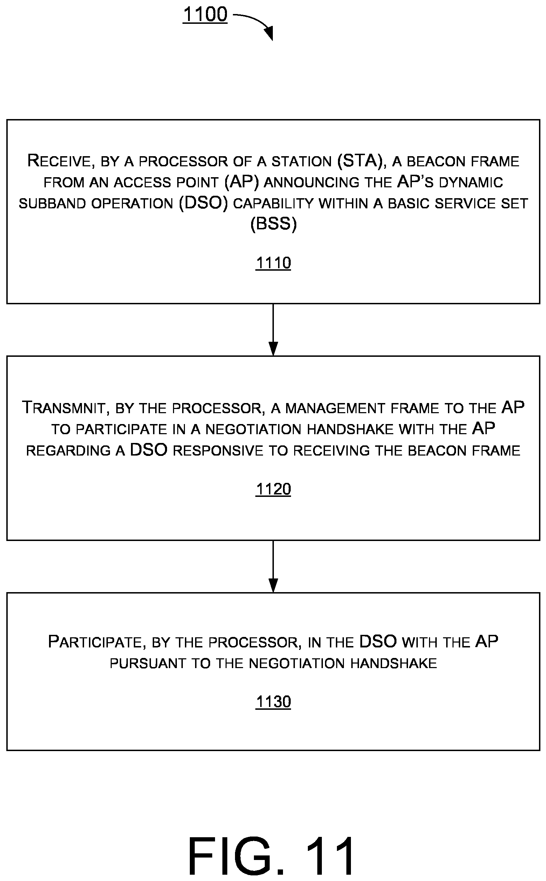

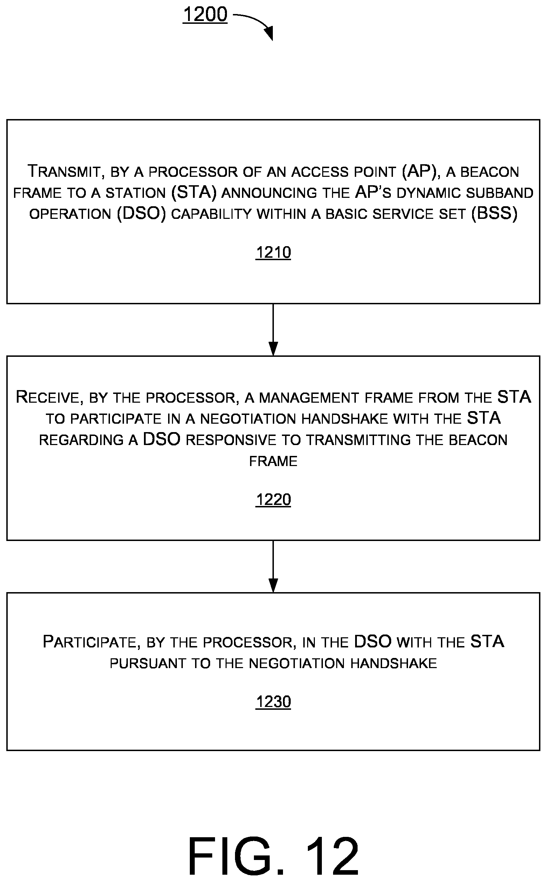

Each of FIG. 11 and FIG. 12 illustrates an example process 1100 and example process 1200, respectively, in accordance with an implementation of the present disclosure. Each of process 1100 and process 1200 may represent an aspect of implementing various proposed designs, concepts, schemes, systems and methods described above. More specifically, each of process 1100 and process 1200 may represent an aspect of the proposed concepts and schemes pertaining to handling regulatory prioritized services in a non-allowed area in mobile communications in accordance with the present disclosure. Each of process 1100 and process 1200 may include one or more operations, actions, or functions as illustrated by one or more of blocks 1110, 1120 and 1130 for process 1100, and blocks 1210, 1220 and 1230 for process 1200. Although illustrated as discrete blocks, various blocks of each of process 1100 and process 1200 may be divided into additional blocks, combined into fewer blocks, or eliminated, depending on the desired implementation. Moreover, the blocks/sub-blocks of each of process 1100 and process 1200 may be executed in the order shown in FIG. 11 and FIG. 12, respectively, or in a different order. Furthermore, one or more of the blocks/sub-blocks of each of process 1100 and process 1200 may be executed repeatedly or iteratively. Each of process 1100 and process 1200 may be implemented by or in apparatus 210 and apparatus 220 as well as any variations thereof. Solely for illustrative purposes and without limiting the scope, each of process 1100 and process 1200 is described below in the context of apparatus 1010 as a STA (e.g., STA 110) and apparatus 1020 as an AP (e.g., STA 120) in a BSS.

Process 1100 may begin at block 1110.

At 1110, process 1100 may involve processor 1012 of apparatus 1010, as a STA, receiving, via transceiver 1016, a beacon frame from an AP (e.g., apparatus 1020) announcing the AP's DSO capability within a BSS. Process 1100 may proceed from 1110 to 1120.

At 1120, process 1100 may involve processor 1012 transmitting, via transceiver 1016, a management frame to the AP to participate in a negotiation handshake with the AP regarding a DSO responsive to receiving the beacon frame. Process 1100 may proceed from 1120 to 1130.

At 1130, process 1100 may involve processor 1012 participating, via transceiver 1016, in the DSO with the AP pursuant to the negotiation handshake.

In some implementations, the beacon frame may contain a DSO operation parameters field including a subband size subfield and an optional subband bitmap subfield. The subband size subfield may indicate a subband bandwidth size supported by the AP. The optional subband bitmap subfield either: (a) may indicate one or more positions of one or more 80MHz subbands utilized for the DSO responsive to the subband bandwidth size supported by the AP including an 80MHz bandwidth; or (b) may not exist responsive to the subband bandwidth size supported by the AP not including the 80MHz bandwidth.

In some implementations, the subband size subfield may include two bits, and the optional subband bitmap subfield may include four bits responsive to the subband bandwidth size supported by the AP including the 80MHz bandwidth.

In some implementations: (i) a first value of the two bits of the subband size subfield may indicate the subband bandwidth size supported by the AP being 80MHz, (ii) a second value of the two bits of the subband size subfield may indicate the subband bandwidth size supported by the AP being 160MHz, (iii) each bit of the four bits of the optional subband bitmap subfield may be set to "1" to indicate a respective 80MHz subband being used for the DSO, and (iv) each bit of the four bits of the optional subband bitmap subfield may be set to "0" to indicate the respective 80MHz subband not being used for the DSO.

In some implementations, the management frame may contain a DSO operation parameters field including a subband bandwidth size subfield, an optional subband bitmap subfield, a DSO switching delay subfield and a DSO switching back delay subfield. The subband bandwidth size subfield may indicate a subband bandwidth size supported by the STA. The optional subband bitmap subfield either: (a) may indicate one or more positions of one or more 80MHz subbands utilized for the DSO responsive to the subband bandwidth size supported by the STA including an 80MHz bandwidth; or (b) may not exist responsive to the subband bandwidth size supported by the STA not including the 80MHz bandwidth.

In some implementations, the subband size subfield may include two bits, and the optional subband bitmap subfield may include four bits responsive to the subband bandwidth size supported by the STA including the 80MHz bandwidth.

In some implementations: (i) a first value of the two bits of the subband size subfield may indicate the subband bandwidth size supported by the STA being 80MHz, (ii) a second value of the two bits of the subband size subfield may indicate the subband bandwidth size supported by the STA being 160MHz, (iii) each bit of the four bits of the optional subband bitmap subfield may be set to "1" to indicate a respective 80MHz subband being used for the DSO, and (iv) each bit of the four bits of the optional subband bitmap subfield may be set to "0" to indicate the respective 80MHz subband not being used for the DSO.

In some implementations, the DSO switching delay subfield may indicate an amount of time for the STA to switch from a primary subband to a target subband used during the DSO, and the DSO switching back delay subfield may indicate another amount of time for the STA to switch from the target subband back to the primary subband.

In some implementations, the management frame may include a probe request frame, a probe response frame or a new management frame.

Process 1200 may begin at block 1210.

At 1210, process 1200 may involve processor 1022 of apparatus 1020, as an AP, transmitting, via transceiver 1026, a beacon frame to a STA (e.g., apparatus 1010) announcing the AP's DSO capability within a BSS. Process 1200 may proceed from 1210 to 1220.

At 1220, process 1200 may involve processor 1022 receiving, via transceiver 1026, a management frame from the STA to participate in a negotiation handshake with the STA regarding a DSO responsive to transmitting the beacon frame. Process 1200 may proceed from 1220 to 1230.

At 1230, process 1200 may involve processor 1022 participating, via transceiver 1026, in the DSO with the STA pursuant to the negotiation handshake.

In some implementations, the beacon frame may contain a DSO operation parameters field including a subband size subfield and an optional subband bitmap subfield. The subband size subfield may indicate a subband bandwidth size supported by the AP. The optional subband bitmap subfield either: (a) may indicate one or more positions of one or more 80MHz subbands utilized for the DSO responsive to the subband bandwidth size supported by the AP including an 80MHz bandwidth; or (b) may not exist responsive to the subband bandwidth size supported by the AP not including the 80MHz bandwidth.

In some implementations, the subband size subfield may include two bits, and the optional subband bitmap subfield may include four bits responsive to the subband bandwidth size supported by the AP including the 80MHz bandwidth.

In some implementations: (i) a first value of the two bits of the subband size subfield may indicate the subband bandwidth size supported by the AP being 80MHz, (ii) a second value of the two bits of the subband size subfield may indicate the subband bandwidth size supported by the AP being 160MHz, (iii) each bit of the four bits of the optional subband bitmap subfield may be set to "1" to indicate a respective 80MHz subband being used for the DSO, and (iv) each bit of the four bits of the optional subband bitmap subfield may be set to "0" to indicate the respective 80MHz subband not being used for the DSO.

In some implementations, the management frame may contain a DSO operation parameters field including a subband bandwidth size subfield, an optional subband bitmap subfield, a DSO switching delay subfield and a DSO switching back delay subfield. The subband bandwidth size subfield may indicate a subband bandwidth size supported by the STA. The optional subband bitmap subfield either: (a) may indicate one or more positions of one or more 80MHz subbands utilized for the DSO responsive to the subband bandwidth size supported by the STA including an 80MHz bandwidth; or (b) may not exist responsive to the subband bandwidth size supported by the STA not including the 80MHz bandwidth.

In some implementations, the subband size subfield may include two bits, and the optional subband bitmap subfield may include four bits responsive to the subband bandwidth size supported by the STA including the 80MHz bandwidth.

In some implementations: (i) a first value of the two bits of the subband size subfield may indicate the subband bandwidth size supported by the STA being 80MHz, (ii) a second value of the two bits of the subband size subfield may indicate the subband bandwidth size supported by the STA being 160MHz, (iii) each bit of the four bits of the optional subband bitmap subfield may be set to "1" to indicate a respective 80MHz subband being used for the DSO, and (iv) each bit of the four bits of the optional subband bitmap subfield may be set to "0" to indicate the respective 80MHz subband not being used for the DSO.

In some implementations, the DSO switching delay subfield may indicate an amount of time for the STA to switch from a primary subband to a target subband used during the DSO, and the DSO switching back delay subfield may indicate another amount of time for the STA to switch from the target subband back to the primary subband.

**In** some implementations, the management frame may include a probe request frame, a probe response frame or a new management frame.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
receiving, by a processor of a station, in the following also referred to as STA, a beacon frame from an access point, in the following also referred to as AP, announcing the AP's dynamic subband operation, in the following also referred to as DSO, capability within a basic service set, in the following also referred to as BSS, (1110);
transmitting, by the processor, a management frame to the AP to participate in a negotiation handshake with the AP regarding a DSO responsive to receiving the beacon frame (1120), and
participating, by the processor, in the DSO with the AP pursuant to the negotiation handshake (1130).

2. A method, comprising:
transmitting, by a processor of an access point, in the following also referred to as AP, a beacon frame to a station, in the following also referred to as STA, announcing the AP's dynamic subband operation, in the following also referred to as DSO, capability within a basic service set, in the following also referred to as BSS, (1210);
receiving, by the processor, a management frame from the STA to participate in a negotiation handshake with the STA regarding a DSO responsive to transmitting the beacon frame (1220), and
participating, by the processor, in the DSO with the STA pursuant to the negotiation handshake (1230).

3. The method of Claim 1 or 2, wherein the beacon frame contains a DSO operation parameters field comprising a subband size subfield and an optional subband bitmap subfield, and wherein:
the subband size subfield indicates a subband bandwidth size supported by the AP; and
the optional subband bitmap subfield either:
indicates one or more positions of one or more 80MHz subbands utilized for the DSO responsive to the subband bandwidth size supported by the AP including an 80MHz bandwidth; or
does not exist responsive to the subband bandwidth size supported by the AP not including the 80MHz bandwidth.

4. The method of Claim 3, wherein the subband size subfield comprises two bits, and wherein the optional subband bitmap subfield comprises four bits responsive to the subband bandwidth size supported by the AP including the 80MHz bandwidth.

5. The method of Claim 4, wherein:
a first value of the two bits of the subband size subfield indicates the subband bandwidth size supported by the AP being 80MHz,
a second value of the two bits of the subband size subfield indicates the subband bandwidth size supported by the AP being 160MHz,
each bit of the four bits of the optional subband bitmap subfield is set to "1" to indicate a respective 80MHz subband being used for the DSO, and
each bit of the four bits of the optional subband bitmap subfield is set to "0" to indicate the respective 80MHz subband not being used for the DSO.

6. The method of any one of Claims 1 to 5, wherein the management frame contains a DSO operation parameters field comprising a subband bandwidth size subfield, an optional subband bitmap subfield, a DSO switching delay subfield and a DSO switching back delay subfield, and wherein:
the subband bandwidth size subfield indicates a subband bandwidth size supported by the STA; and
the optional subband bitmap subfield either:
indicates one or more positions of one or more 80MHz subbands utilized for the DSO responsive to the subband bandwidth size supported by the STA including an 80MHz bandwidth; or
does not exist responsive to the subband bandwidth size supported by the STA not including the 80MHz bandwidth.

7. The method of Claim 6, wherein the subband size subfield comprises two bits, and wherein the optional subband bitmap subfield comprises four bits responsive to the subband bandwidth size supported by the STA including the 80MHz bandwidth.

8. The method of Claim 7, wherein:
a first value of the two bits of the subband size subfield indicates the subband bandwidth size supported by the STA being 80MHz,
a second value of the two bits of the subband size subfield indicates the subband bandwidth size supported by the STA being 160MHz,
each bit of the four bits of the optional subband bitmap subfield is set to "1" to indicate a respective 80MHz subband being used for the DSO, and
each bit of the four bits of the optional subband bitmap subfield is set to "0" to indicate the respective 80MHz subband not being used for the DSO.

9. The method of any one of Claims 6 to 8, wherein the DSO switching delay subfield indicates an amount of time for the STA to switch from a primary subband to a target subband used during the DSO, and wherein the DSO switching back delay subfield indicates another amount of time for the STA to switch from the target subband back to the primary subband.

10. The method of any one of Claims 1 to 9, wherein the management frame comprises a probe request frame, a probe response frame or a new management frame.

11. An apparatus (1010; 1020), comprising:
a transceiver (1016; 1026) configured to communicate wirelessly; and
a processor (1012; 1022) coupled to the transceiver (1016; 1026) and configured to perform operations comprising:
performing, via the transceiver (1016; 1026), a negotiation handshake regarding a dynamic subband operation, in the following also referred to as DSO, with one other apparatus (1020; 1010); and
participating, via the transceiver (1016; 1026), in the DSO with the other apparatus (1020; 1010) pursuant to the negotiation handshake,
wherein the participating in the negotiation handshake comprises exchanging, with the other apparatus (1020; 1010), information on capabilities in supporting the DSO, and
wherein the information on the capabilities comprises information on at least a subband size, a subband position, a switching delay and a switching back delay.

12. The apparatus (1010; 1020) of Claim 11, wherein:
responsive to the apparatus (1010; 1020) functioning as an access point, in the following also referred to as AP, (1020) the performing the negotiation handshake comprise:
generating and transmitting a beacon frame to a station, in the following also referred to as STA, (1010); and
receiving and processing a management frame from the STA (1010) responsive to transmitting the beacon frame,
responsive to the apparatus functioning as the STA (1010), the performing the negotiation handshake comprises:
receiving and processing a beacon frame from another apparatus functioning as the AP (1020),
generating and transmitting a management frame to the AP (1020) responsive to receiving the beacon frame; and
the beacon frame contains a respective DSO operation parameters field comprising a respective subband size subfield and an optional respective subband bitmap subfield, such that:
the respective subband size subfield indicates a subband bandwidth size supported by the AP (1020); and
the optional respective subband bitmap subfield either:
indicates one or more positions of one or more 80MHz subbands utilized for the DSO responsive to the subband bandwidth size supported by the AP (1020) including an 80MHz bandwidth; or
does not exist responsive to the subband bandwidth size supported by the AP (1020) not including the 80MHz bandwidth,
the management frame contains a respective DSO operation parameters field comprising a respective subband bandwidth size subfield, an optional respective subband bitmap subfield, a DSO switching delay subfield and a DSO switching back delay subfield, such that:
the respective subband bandwidth size subfield indicates a subband bandwidth size supported by the STA (1010); and
the optional respective subband bitmap subfield either:
indicates one or more positions of one or more 80MHz subbands utilized for the DSO responsive to the subband bandwidth size supported by the STA (1010) including an 80MHz bandwidth; or
does not exist responsive to the subband bandwidth size supported by the STA (1010) not including the 80MHz bandwidth;
the DSO switching delay subfield indicates an amount of time for the STA (1010) to switch from a primary subband to a target subband used during the DSO; and
the DSO switching back delay subfield indicates another amount of time for the STA (1010) to switch from the target subband back to the primary subband.
